# EUROPEAN PATENT APPLICATION

(11) **EP 4 684 625 A1**
(43) Date of publication of application: **28.01.2026**
(21) Application number: 25179290.9
(22) Date of filing: 28.05.2025
(51) Int. Cl.: A01D 34/00, A01D 34/64, A01D 34/66

(54) **RIDING MOWER**

(30) Priority: 23.07.2024 CN 202410995633
(71) Applicant: Nanjing Chervon Industry Co., Ltd., Nanjing, Jiangsu 211106 (CN)
(72) Inventor: GAO, Fan, Nanjing (CN); WEI, Tianfang, Nanjing (CN); ZHANG, Min, Nanjing (CN)
(74) Representative: Sun, Yiming

(57) **Abstract**

Provided is a riding mower. The riding mower includes a steering wheel, a carrier, a body, a cutting assembly, a walking wheel assembly, a walking motor, a joystick, at least one sensor, and a controller, where a magnetic body is provided on the joystick, a position of the magnetic body changes according to an operation of a user, the at least one sensor is disposed in proximity to the magnetic body and configured to sense a change in a magnetic field of the magnetic body, the controller is connected to the walking motor and the at least one sensor, and the controller is configured to receive, from the at least one sensor, a value related to the change in the magnetic field of the magnetic body and control a rotational direction of the walking motor according to the value related to the change in the magnetic field.

## Description

### RELATED APPLICATION INFORMATION

This application claims the benefit of Chinese Patent Application No. CN 202410995633.4, filed on Jul. 23, 2024, which is incorporated by reference in its entirety herein.

### TECHNICAL FIELD

The present application relates to an electric device and, in particular, to a riding mower.

### BACKGROUND

An electric device in the related art may be a riding device such as a riding mower or a tractor. For an existing riding device, an advance switch or a reverse switch is generally triggered to send a signal for triggering forward or backward movement so that the riding device advances or reverses.

However, the riding device belongs to an outdoor work machine. Therefore, both the advance switch and the reverse switch are affected by an external environment including, but not limited to, rain, dirt, and grass clippings. The existing riding device generally adopts a trigger-type mechanical switch which is increasingly unable to satisfy the use requirements of users due to a relatively weak ability to resist the external environment.

This part provides background information related to the present application, and the background information is not necessarily the existing art.

### SUMMARY

An object of the present application is to solve or at least alleviate part or all of the preceding problems. Therefore, an object of the present application is to provide a riding mower in which a switch signal for triggering an action of a walking motor is sent in a non-contact manner, where such switch structure has a relatively strong ability to resist changes in an external environment.

To achieve the preceding object, the present application adopts the technical solutions below.

A riding mower includes a steering wheel; a carrier for carrying a user; a body supporting the carrier; a cutting assembly including a mowing element for mowing grass, where the cutting assembly is mounted to the body; a walking wheel assembly configured to drive the riding mower to walk on a plane; a walking motor for driving the walking wheel assembly; a joystick operable by the user, where a magnetic body is provided on the joystick, and a position of the magnetic body changes according to an operation of the user; at least one sensor disposed in proximity to the magnetic body and configured to sense a change in a magnetic field of the magnetic body; and a controller connected to the walking motor and the at least one sensor, where the controller is configured to receive, from the at least one sensor, a value related to the change in the magnetic field of the magnetic body and control a rotational direction of the walking motor according to the value related to the change in the magnetic field.

In some examples, each of the at least one sensor is a Hall effect sensor.

In some examples, two sensors are provided, and the two sensors are disposed at a first position of the joystick corresponding to a first operation of the user and a second position of the joystick corresponding to a second operation of the user, respectively.

In some examples, the two sensors include a first sensor disposed at the first position and a second sensor disposed at the second position; when the first sensor outputs a high level and the second sensor outputs a low level, the controller sends an advance signal for controlling the walking motor to drive the riding mower to advance; when the first sensor outputs a low level and the second sensor outputs a high level, the controller sends a reverse signal for controlling the walking motor to drive the riding mower to reverse; and when both the first sensor and the second sensor output low levels, the controller sends a neutral signal for controlling the walking motor to stop driving the riding mower.

In some examples, each Hall effect sensor includes at least two Hall chips separately.

In some examples, when the at least two Hall chips included in the Hall effect sensor sense that the magnetic field of the magnetic body changes with the same tendency, the controller sends a signal for controlling the rotational direction of the walking motor.

In some examples, when any one of the at least two Hall chips included in the Hall effect sensor senses that the magnetic field of the magnetic body changes, the controller sends a signal for controlling the rotational direction of the walking motor.

In some examples, the joystick is disposed on a control panel, a grip is disposed at one end of the joystick, and the magnetic body is disposed at the other end of the joystick.

In some examples, the riding mower further includes: a cutting motor for driving the cutting assembly; a button operable by the user, wherein a button magnetic body is provided under the button; and a button sensor disposed in proximity to the button magnetic body and configured to sense a change in a magnetic field of the button magnetic body; wherein the controller is connected to the cutting motor and the button sensor, and the controller is further configured to receive, from the button sensor, a value related to the change in the magnetic field of the button magnetic body and control, according to the value related to the change in the magnetic field, the cutting motor to start or stop.

In some examples, the button magnetic body has at least a first position corresponding to a first operation of the user and a second position corresponding to a second operation of the user, and the controller controls the cutting motor to start when the button magnetic body is at the first position, and the controller controls the cutting motor to stop when the button magnetic body is at the second position.

In some examples, the button sensor is a Hall effect sensor.

In some examples, the riding mower further includes: a carrier magnetic body disposed in proximity to the carrier, wherein a position of the carrier magnetic body changes according to a load of the carrier; and a carrier sensor disposed in proximity to the carrier magnetic body and configured to sense a change in a magnetic field of the carrier magnetic body; wherein the controller is connected to the carrier sensor, and the controller is configured to receive, from the carrier sensor, a value related to the change in the magnetic field of the carrier magnetic body and determine, according to the value related to the change in the magnetic field, whether the carrier (10) carries the user.

In some examples, the riding mower has a manual mode and an unmanned mode, and the riding mower operates in the unmanned mode when the carrier carries no user.

In some examples, the rider mower further includes: a power supply assembly configured to supply power to the cutting assembly and the walking wheel assembly; wherein the riding mower allows the power supply assembly to supply power to the cutting assembly and the walking wheel assembly only when the carrier carries the user.

In some examples, the carrier sensor is a Hall effect sensor.

A riding mower includes a carrier for carrying a user; a body supporting the carrier; a cutting assembly including a mowing element for mowing grass, where the cutting assembly is mounted to the body; a cutting motor for driving the cutting assembly; a walking wheel assembly configured to drive the riding mower to walk on a plane; a walking motor for driving the walking wheel assembly; an operating member operable by the user, where a magnetic body is provided on the operating member, and the magnetic body has at least a first position corresponding to a first operation of the user and a second position corresponding to a second operation of the user; two sensors disposed adjacent to the first position and the second position respectively and configured to sense changes in a magnetic field of the magnetic body; and a controller connected to the two sensors, the cutting motor, and the walking motor, where the controller is configured to receive, from the two sensors, values related to the changes in the magnetic field of the magnetic body and control the cutting motor or the walking motor according to the values related to the changes in the magnetic field.

In some examples, each of the two sensors is a Hall effect sensor.

In some examples, the operating member is a joystick disposed on a control panel, a grip is disposed at an end of the joystick, and the magnetic body is disposed at the other end of the joystick.

In some examples, the magnetic body further has a third position corresponding to a third operation of the user.

In some examples, the magnetic body and the Hall effect sensor are integrated into a modular Hall switch.

In some examples, the two sensors include a first sensor adjacent to the first position and a second sensor adjacent to the second position; when the first sensor outputs a high level and the second sensor outputs a low level, the controller sends an advance signal for controlling the walking motor to drive the riding mower to advance; when the first sensor outputs a low level and the second sensor outputs a high level, the controller sends a reverse signal for controlling the walking motor to drive the riding mower to reverse; and when both the first sensor and the second sensor output low levels, the controller sends a neutral signal for controlling the walking motor to drive the riding mower to stop.

In some examples, the two sensors include a first sensor adjacent to the first position and a second sensor adjacent to the second position; when the first sensor outputs a high level and the second sensor outputs a low level, the controller sends a first speed signal for controlling the cutting motor to drive the mowing element to rotate at a first rotational speed; when the first sensor outputs a low level and the second sensor outputs a high level, the controller sends a second speed signal for controlling the cutting motor to drive the mowing element to rotate at a second rotational speed; and when both the first sensor and the second sensor output low levels, the controller sends a third speed signal for controlling the cutting motor to drive the mowing element to rotate at a third rotational speed; where the first rotational speed, the second rotational speed, and the third rotational speed are different from each other.

In some examples, one of the first rotational speed, the second rotational speed, and the third rotational speed is zero.

In some examples, each Hall effect sensor includes at least two Hall chips separately.

In some examples, when the at least two Hall chips included in the Hall effect sensor sense that the magnetic field of the magnetic body changes with the same tendency, the controller sends a signal for controlling the walking motor or the cutting motor.

In some examples, when any one of the at least two Hall chips included in the Hall effect sensor senses that the magnetic field of the magnetic body changes, the controller sends a signal for controlling the walking motor or the cutting motor.

A riding mower includes a carrier for carrying a user; a body supporting the carrier; a cutting assembly including a mowing element for mowing grass, where the cutting assembly is mounted to the body; a cutting motor for driving the cutting assembly; a walking wheel assembly configured to drive the riding mower to walk on a plane; a button operable by the user, where a magnetic body is provided under the button; a sensor disposed in proximity to the magnetic body and configured to sense a change in a magnetic field of the magnetic body; and a controller connected to the cutting motor and the sensor, where the controller is configured to receive, from the sensor, a value related to the change in the magnetic field of the magnetic body and control, according to the value related to the change in the magnetic field, the cutting motor to start or stop.

In some examples, a position of the magnetic body changes according to an operation of the user.

In some examples, the magnetic body has at least a first position corresponding to a first operation of the user and a second position corresponding to a second operation of the user, the controller controls the cutting motor to start when the magnetic body is at the first position, and the controller controls the cutting motor to stop when the magnetic body is at the second position.

In some examples, the sensor is a Hall effect sensor.

In some examples, the Hall effect sensor includes at least two Hall chips.

In some examples, when the at least two Hall chips included in the Hall effect sensor sense that the magnetic field of the magnetic body changes with the same tendency, the controller sends a signal for controlling the cutting motor to start or stop.

In some examples, when any one of the at least two Hall chips included in the Hall effect sensor senses that the magnetic field of the magnetic body changes, the controller sends a signal for controlling the cutting motor to start or stop.

In some examples, the button is disposed on a control panel.

In some examples, the magnetic body further includes at least one speed regulation position, and the controller regulates a speed of the cutting motor according to different speed regulation positions.

In some examples, the riding mower is a ride-on mower or a stand-on mower.

A riding mower includes a carrier for carrying a user; a body supporting the carrier; a cutting assembly including a mowing element for mowing grass, where the cutting assembly is mounted to the body; a walking wheel assembly configured to drive the riding mower to walk on a plane; a power supply assembly configured to supply power to the cutting assembly and the walking wheel assembly; a magnetic body disposed in proximity to the carrier, where a position of the magnetic body changes according to a load of the carrier; a sensor disposed in proximity to the magnetic body and configured to sense a change in a magnetic field of the magnetic body; and a controller connected to the sensor, where the controller is configured to receive, from the sensor, a value related to the change in the magnetic field of the magnetic body and determine, according to the value related to the change in the magnetic field, whether the carrier carries the user.

In some examples, the riding mower has a manual mode and an unmanned mode, and the riding mower operates in the unmanned mode when the carrier carries no user.

In some examples, the riding mower allows the power supply assembly to supply power to the cutting assembly and the walking wheel assembly only when the carrier carries the user.

In some examples, the sensor is a Hall effect sensor.

In some examples, the magnetic body and the Hall effect sensor are integrated into a modular Hall switch.

In some examples, the riding mower is a ride-on mower, the carrier is a seat, and the magnetic body is disposed below a cushion of the seat.

In some examples, the riding mower is a stand-on mower, the carrier is a standing plate, and the magnetic body is disposed above or on a side of the standing plate.

In some examples, the Hall effect sensor includes at least two Hall chips.

In some examples, when the at least two Hall chips included in the Hall effect sensor sense that the magnetic field of the magnetic body changes with the same tendency, the controller determines whether the carrier carries the user.

In some examples, when any one of the at least two Hall chips included in the Hall effect sensor senses that the magnetic field of the magnetic body changes, the controller determines whether the carrier carries the user.

The present application has the benefits below.

In the riding mower of the present application, the carrier is used for carrying the user, the body supports the carrier, the cutting assembly includes the mowing element for mowing grass, the cutting assembly is mounted to the body, the walking wheel assembly is used for driving the riding mower to walk on the plane, the walking motor is used for driving the walking wheel assembly, the joystick is operable by the user to pivot about a center of rotation, the magnetic body is disposed on the joystick, the position of the magnetic body changes according to the operation of the user, the at least one sensor is disposed in proximity to the magnetic body and configured to sense the change in the magnetic field of the magnetic body, the controller is connected to the walking motor and the at least one sensor, and the controller is configured to receive, from the at least one sensor, the value related to the change in the magnetic field of the magnetic body and control the rotational direction of the walking motor according to the value related to the change in the magnetic field. The coordination between the sensor and the magnetic body of the riding mower forms a non-contact switch structure, and the non-contact switch structure is more easily hidden, is not easily interfered by an external environment, and is better protected. Moreover, according to only the change tendency of the magnetic field, the controller can control the rotational direction of the walking motor so that a low requirement on a determination condition enables more convenient and flexible control.

### BRIEF DESCRIPTION OF DRAWINGS

FIG. 1 is a schematic view of a ride-on mower.
FIG. 2 is a bottom view of a ride-on mower.
FIG. 3 is a schematic view of a stand-on mower.
FIG. 4 is a bottom view of a stand-on mower.
FIG. 5 is a schematic view of a joystick, a magnetic body, and two sensors in an example.
FIG. 6 is a schematic view illustrating that the magnetic body approaches a first sensor in the structure shown in FIG. 5.
FIG. 7 is a schematic view illustrating that the magnetic body approaches a second sensor in the structure shown in FIG. 5.
FIG. 8 is a schematic view of a button, a magnetic body, and a sensor in another example.
FIG. 9 is a schematic view illustrating that the magnetic body approaches the sensor in the structure shown in FIG. 8.
FIG. 10 is a schematic view illustrating that a magnetic body approaches a first sensor when a carrier is a seat in another example.
FIG. 11 is a schematic view illustrating that the magnetic body approaches a second sensor in the structure shown in FIG. 10.
FIG. 12 is a schematic view illustrating that a magnetic body moves away from a sensor when a carrier is a standing plate in another example.
FIG. 13 is a schematic view illustrating that the magnetic body approaches the sensor in the structure shown in FIG. 12.
FIG. 14 is a schematic view illustrating that a joystick and a button are disposed on a control panel of a ride-on mower.

### Reference list

- 10: carrier
- 20: body
- 30: cutting assembly
- 40: walking wheel assembly
- 41: front wheel
- 42: rear wheel
- 50: walking motor
- 60: cutting motor
- 70: controller
- 80: power supply assembly
- 90: control panel
- 100: operating member
- 110: joystick
- 120: button
- 130: steering wheel
- 140: accelerator pedal
- 200: magnetic body
- 300: sensor
- 400: plunger rod
- 500: elastic member
- 600: connecting rod
- 700: standing plate

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

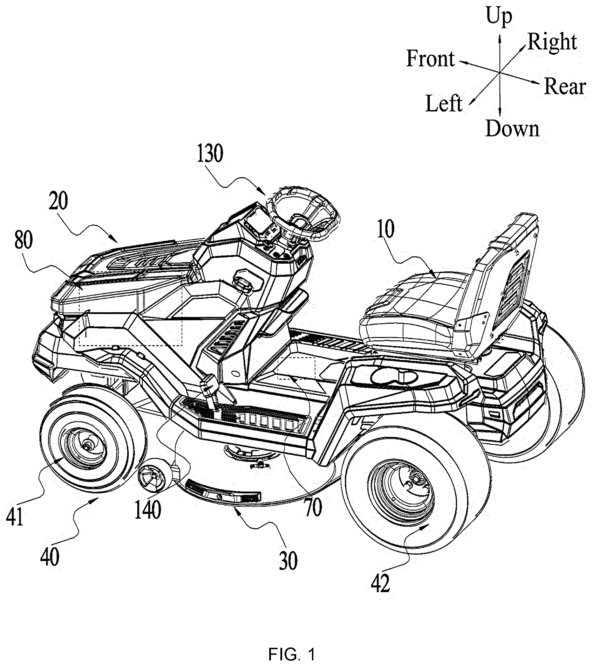

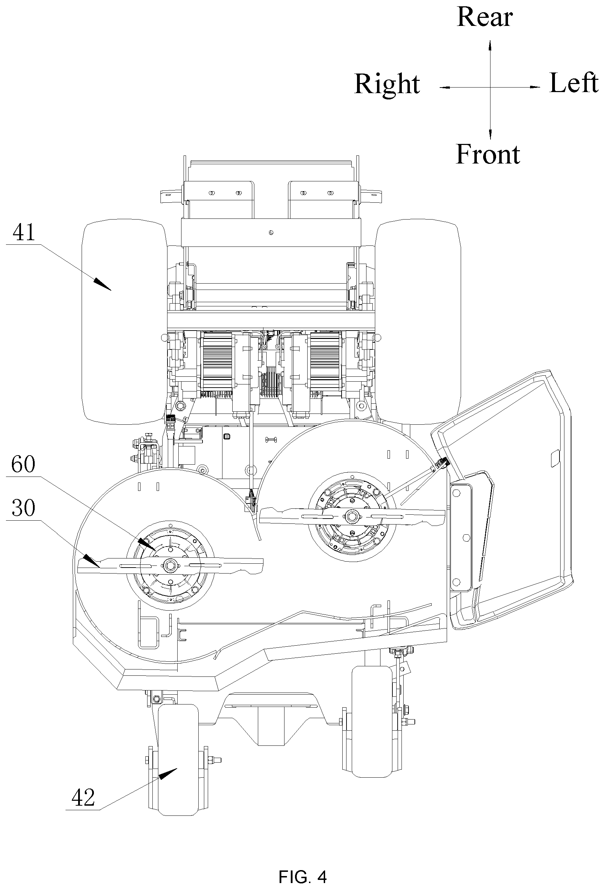

As shown in FIGS. 1 to 13, the present application provides a riding mower, and the riding mower includes a carrier 10, a body 20, a cutting assembly 30, a cutting motor 60, a walking wheel assembly 40, a walking motor 50, an operating member 100, at least one sensor 300, a magnetic body 200, a controller 70, and a power supply assembly 80.

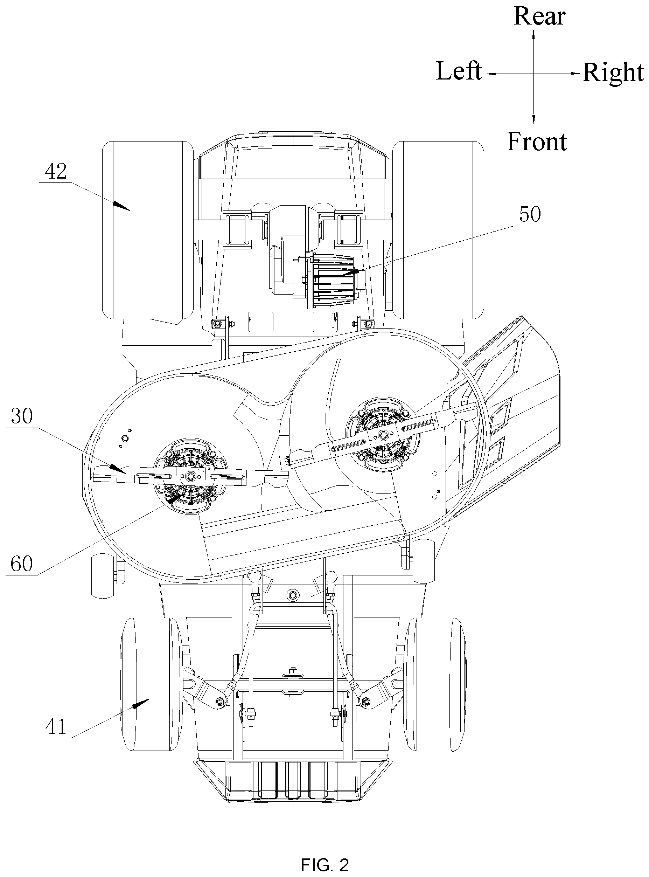

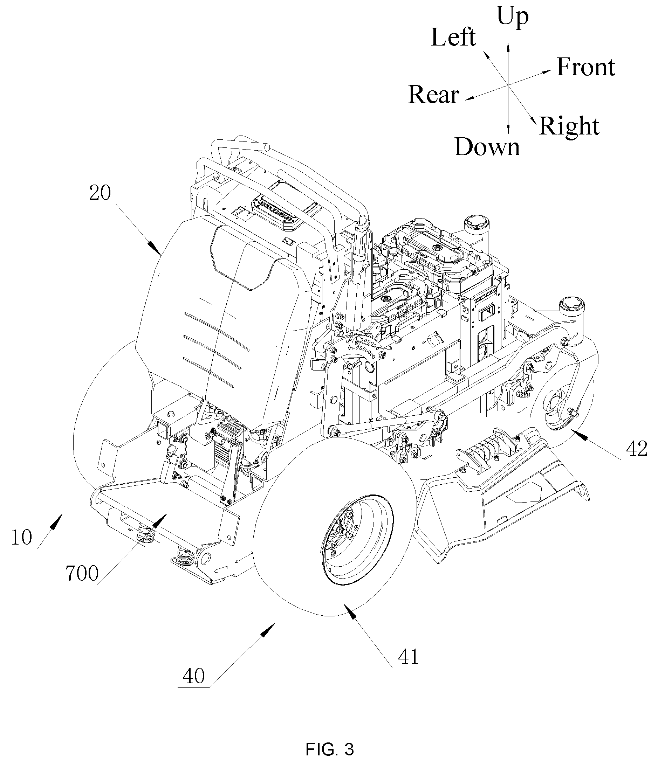

The carrier 10 is used for carrying a user, and the user on the carrier 10 operates the riding mower to control the riding mower to perform various actions. In some examples, as shown in FIGS. 1 and 2, the riding mower is a ride-on mower, the carrier 10 is a seat, and the user operates the operating member 100 of the riding mower in a posture of sitting on the seat. In some parallel examples, as shown in FIGS. 3, 4, 12, and 13, the riding mower is a stand-on mower, the carrier 10 is a standing plate 700, and the user operates the operating member 100 of the riding mower in a posture of standing on the standing plate 700.

The body 20 is the main structure of the riding mower. The carrier 10 is disposed on the body 20, and the body 20 is used for supporting the carrier 10. The cutting assembly 30, the cutting motor 60, the walking wheel assembly 40, the walking motor 50, the operating member 100, the at least one sensor 300, the magnetic body 200, the controller 70, and the power supply assembly 80 are all disposed on the body 20. In some examples, the body 20 includes a frame structure formed by connecting structures such as plates and rods, and the cutting assembly 30, the cutting motor 60, the walking wheel assembly 40, the walking motor 50, the operating member 100, the sensor 300, the magnetic body 200, the controller 70, and the power supply assembly 80 are all disposed on the frame structure.

Both the cutting assembly 30 and the cutting motor 60 are mounted to the body 20, the cutting assembly 30 is mounted to the bottom of the body 20, and the cutting motor 60 is mounted inside the body 20. The cutting assembly 30 includes a mowing element for mowing grass, and the cutting motor 60 is configured to drive the cutting assembly 30 to perform a cutting task. In some examples, the mowing element includes an elongated cutting blade, and a motor shaft of the cutting motor 60 is connected to an end of the cutting blade directly or through a transmission shaft. Driven by the cutting motor 60, the cutting blade can rotate about a vertical axis to perform mowing. In a specific example, multiple cutting blades are provided. The multiple cutting blades are spaced around an axis of the motor shaft. Driven by the cutting motor 60, the multiple cutting blades can act simultaneously to perform mowing.

Both the walking wheel assembly 40 and the walking motor 50 are mounted to the body 20, the walking wheel assembly 40 is mounted to the bottom of the body 20, the walking motor 50 is mounted inside the body 20, the walking wheel assembly 40 is configured to drive the riding mower to walk on a plane, and the walking motor 50 is configured to drive the walking wheel assembly 40. In some examples, the walking wheel assembly 40 includes front wheels 41 and rear wheels 42, the front wheels 41 are rotatably connected to the front of the body 20, and the rear wheels 42 are rotatably connected to the rear of the body 20. In a specific example, two front wheels 41 are provided, which are a left front wheel and a right front wheel, respectively, and two rear wheels 42 are provided, which are a left rear wheel and a right rear wheel, respectively. In some examples, the riding mower is driven in a rear drive manner, and the walking wheel assembly 40 further includes a transmission mechanism drivingly connected to the rear wheels 42 and the walking motor 50, where the structure of the transmission mechanism belongs to the existing art and is not described in detail here.

The operating member 100 is operable by the user, and the magnetic body 200 is disposed on the operating member 100, where the magnetic body 200 may be a magnet, and a position of the magnetic body 200 can change under an operation of the user. The at least one sensor 300 is disposed in proximity to the magnetic body 200 and configured to sense a change in a magnetic field of the magnetic body 200. After sensing the change in the magnetic field of the magnetic body 200, the sensor 300 can send a signal of the change in the magnetic field to the controller 70. The controller 70 is configured to receive, from the at least one sensor 300, a value related to the change in the magnetic field of the magnetic body 200 and generate, according to the value related to the change in the magnetic field, a signal for controlling a controlled component.

The non-contact coordination between the sensor 300 and the magnetic body 200 forms a non-contact switch structure. Compared with a contact-based mechanical switch on an existing riding mower, the non-contact switch structure is more easily hidden in the body 20 so that the sensor 300 and the magnetic body 200 coordinate with each other without being easily interfered by an external environment, are better protected, are not easily damaged due to changes in the external environment, and have higher control accuracy. Moreover, in the riding mower of the present application, the controller 70 can control a rotational direction of the walking motor 50 according to only a change tendency of the magnetic field. Compared with an accurate range of point values used as a determination condition in an existing control process, the strength of the magnetic field is compared and used as a determination condition in a control process in the present application so that a low requirement on the determination condition enables a more convenient and flexible control process of the controller 70.

The non-contact switch structure formed by the sensor 300 and the magnetic body 200 can be applied between different operating members 100 and controlled components so that the user can control different controlled components by operating different operating members 100. The following categories are introduced.

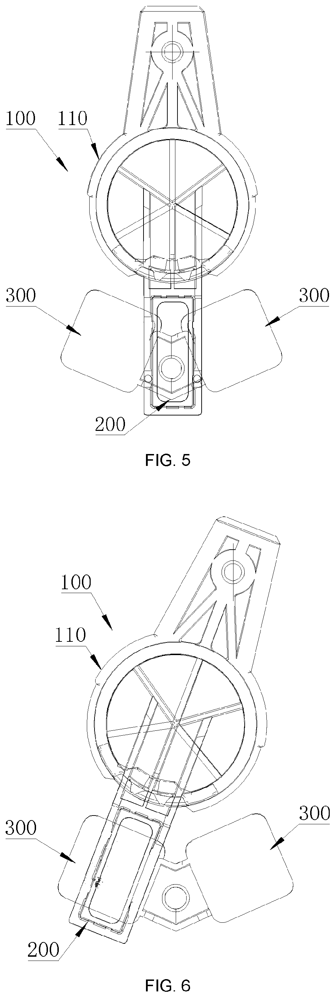

As shown in FIGS. 5 to 7, in an example, the operating member 100 includes a joystick 110 operable by the user to pivot about a center of rotation, the magnetic body 200 is disposed on the joystick 110, and the position of the magnetic body 200 changes according to the operation of the user. The controller 70 is connected to the walking motor 50 and the at least one sensor 300, and the controller 70 is configured to receive, from the at least one sensor 300, the value related to the change in the magnetic field of the magnetic body 200 and control the rotational direction of the walking motor 50 according to the value related to the change in the magnetic field.

If the user desires to control the riding mower to switch between an advance gear, a reverse gear, and a neutral gear, the user may operate the joystick 110 so that the joystick 110 rotates about the center of rotation. Since the magnetic body 200 is disposed on the joystick 110, the position of the magnetic body 200 changes as the joystick 110 rotates so that the position of the magnetic body 200 relative to the sensor 300 changes, and the sensor 300 can sense the corresponding change in the magnetic field of the magnetic body 200. When the sensor 300 senses that the strength of the magnetic field changes according to a predicted tendency, the controller 70 may control the rotational direction of the walking motor 50 according to a preset control logic so that the walking wheel assembly 40 advances or reverses. In coordination with the joystick 110, the riding mower further includes a steering wheel 130 and an accelerator pedal 140, where the steering wheel 130 is operated by the user to set a steering angle of the riding mower, and the accelerator pedal 140 is operated by the user to set an advance or reverse speed of the riding mower. The controller 70 controls a rotational speed of the walking motor 50 according to at least signals from the steering wheel 130 and the accelerator pedal 140. Thus, when driving the riding mower, the user can control the riding mower jointly through the joystick 110, the steering wheel 130, and the accelerator pedal 140. In some examples, the riding mower further includes a brake pedal.

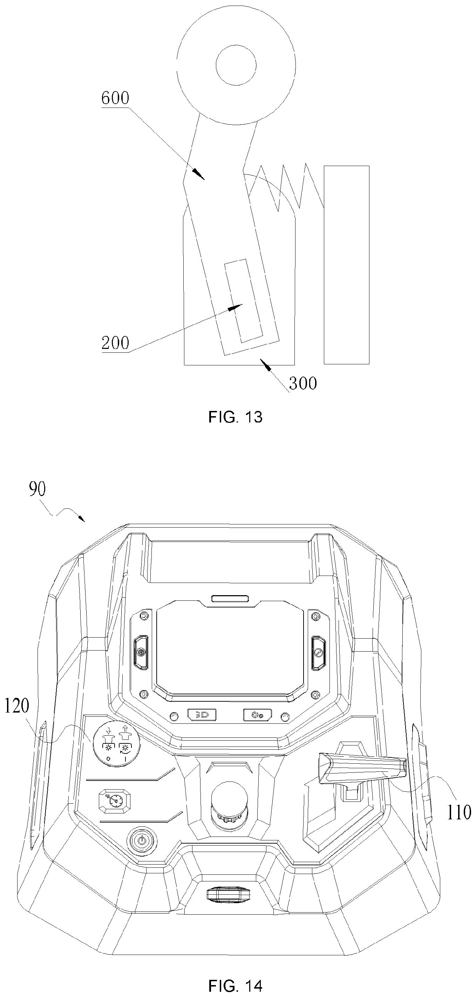

In an example, as shown in FIG. 14, the joystick 110 is disposed on a control panel 90, a grip is disposed at an end of the joystick 110, and the magnetic body 200 is disposed at the other end of the joystick 110. The user may rotate the joystick 110 by holding the grip.

The number of sensors 300 is set as required, where one, two, or more sensors may be provided.

When one sensor 300 is disposed, in a specific example, when the sensor 300 outputs a high level, the walking motor 50 rotates forward, and the walking wheel assembly 40 advances; and when the sensor 300 outputs a low level, the walking motor 50 rotates reversely, and the walking wheel assembly 40 reverses. In another example, when the sensor 300 outputs a high level, the walking motor 50 rotates reversely, and the walking wheel assembly 40 reverses; and when the sensor 300 outputs a low level, the walking motor 50 rotates forward, and the walking wheel assembly 40 advances. When the strength of the magnetic field sensed by the sensor 300 remains unchanged, the walking motor 50 stops rotating, and the walking wheel assembly 40 stops rotating. It is to be noted that when the sensor 300 senses a strong magnetic field strength (where a specific value of the strength of the magnetic field is not limited), the sensor 300 can output a high level; and when the sensor 300 senses a weak magnetic field strength (where a specific value of the strength of the magnetic field is not limited), the sensor 300 can output a low level. In some other examples, the sensor 300 may be configured to output a low level when sensing a strong magnetic field strength and output a high level when sensing a weak magnetic field strength.

When two sensors 300 are disposed, the two sensors 300 are disposed at a first position of the joystick 110 corresponding to a first operation of the user and a second position of the joystick 110 corresponding to a second operation of the user, respectively. For convenience of description, one of the two sensors 300 at the first position is defined as a first sensor, and one of the two sensors 300 at the second position is defined as a second sensor. When the first sensor outputs a high level and the second sensor outputs a low level, the controller 70 sends an advance signal for controlling the walking motor 50 to drive the riding mower to advance. When the first sensor outputs a low level and the second sensor outputs a high level, the controller 70 sends a reverse signal for controlling the walking motor 50 to drive the riding mower to reverse. When both the first sensor and the second sensor output low levels, the controller 70 sends a neutral signal for controlling the walking motor 50 to stop driving the riding mower.

In some examples, when more gears are required, three or more sensors 300 may be provided. That is to say, in addition to the first sensor at the first position and the second sensor at the second position, an n-th sensor at an n-th position may be included. When the n-th sensor outputs a high level and the other sensors output low levels, the controller 70 sends a corresponding gear signal.

In some specific examples, the sensor 300 is a Hall effect sensor. The Hall effect sensor includes a Hall chip. The magnetic body 200 generates the magnetic field, and the Hall chip can sense the strength of the magnetic field to trigger the generation of a signal. It is to be noted that the specific structure of the Hall effect sensor belongs to the existing art and is not described in detail here.

Each Hall effect sensor may include one Hall chip or at least two Hall chips.

In some specific examples, when all the Hall chips included in the Hall effect sensor sense that the magnetic field of the magnetic body 200 changes with the same tendency, the controller 70 sends a signal for controlling the rotational direction of the walking motor 50. Thus, a multi-signal trigger can be achieved, thereby controlling the walking motor 50 with higher accuracy and reducing a probability of a false trigger.

For example, two Hall effect sensors are provided, and each Hall effect sensor includes two Hall chips. When the two Hall chips of the Hall effect sensor at the first position both sense that the magnetic field is strengthened and the two Hall chips of the Hall effect sensor at the second position both sense that the magnetic field is weakened, that is, the two Hall chips of the Hall effect sensor at the first position both output high levels and the two Hall chips of the Hall effect sensor at the second position both output low levels, the controller 70 sends the advance signal for controlling the walking motor 50 to drive the riding mower to advance.

Conversely, when the two Hall chips of the Hall effect sensor at the first position both sense that the magnetic field is weakened and the two Hall chips of the Hall effect sensor at the second position both sense that the magnetic field is strengthened, that is, the two Hall chips of the Hall effect sensor at the first position both output low levels and the two Hall chips of the Hall effect sensor at the second position both output high levels, the controller 70 sends the reverse signal for controlling the walking motor 50 to drive the riding mower to reverse.

When the magnetic field sensed by the two Hall chips of the Hall effect sensor at the first position is substantially the same as the magnetic field sensed by the two Hall chips of the Hall effect sensor at the second position, that is, the two Hall chips of the Hall effect sensor at the first position and the two Hall chips of the Hall effect sensor at the second position all output low levels, the controller 70 sends the neutral signal for controlling the walking motor 50 to stop driving the riding mower.

In some specific examples, when any one of the Hall chips included in the Hall effect sensor senses that the magnetic field of the magnetic body 200 changes, the controller 70 sends the signal for controlling the rotational direction of the walking motor 50. Thus, multi-channel redundancy can be achieved, detection effectiveness can be improved, and a fault tolerance rate can be increased. When one Hall chip is faulty, another Hall chip operates so that the normal sensing of the Hall effect sensor is not affected.

In an example, the operating member 100 is operable by the user, the magnetic body 200 is disposed on the operating member 100, and the magnetic body 200 has at least the first position corresponding to the first operation of the user and the second position corresponding to the second operation of the user. In an example, the riding mower includes two sensors 300 disposed adjacent to the first position and the second position, respectively and configured to sense changes in a magnetic field of the magnetic body 200. The controller 70 is connected to the two sensors 300, the cutting motor 60, and the walking motor 50, and the controller 70 is configured to receive, from the two sensors 300, values related to the changes in the magnetic field of the magnetic body 200 and control the cutting motor 60 or the walking motor 50 according to the values related to the changes in the magnetic field.

If the user desires to control the cutting motor 60 or the walking motor 50, the user may operate the operating member 100 so that the operating member 100 switches between the first position and the second position. Since the magnetic body 200 is disposed on the operating member 100, the position of the magnetic body 200 changes as the operating member 100 moves so that positions of the magnetic body 200 relative to the two sensors 300 change, and the two sensors 300 can sense the corresponding changes in the magnetic field of the magnetic body 200. The intensities of the magnetic field of the magnetic body 200 sensed by the two sensors 300 are compared, and the controller 70 may control the cutting motor 60 or the walking motor 50 according to a preset control logic so that the walking wheel assembly 40 advances or reverses or the cutting assembly 30 starts or stops cutting.

In some specific examples, the operating member 100 is the joystick 110 disposed on the control panel 90, the grip is disposed at an end of the joystick 110, and the magnetic body 200 is disposed at the other end of the joystick 110. The user may rotate the joystick 110 by holding the grip.

The two sensors 300 include the first sensor adjacent to the first position and the second sensor adjacent to the second position. Further, the magnetic body 200 further has a third position corresponding to a third operation of the user. The third position is located between the first position and the second position. In an example, the third position is just an initial position of the magnetic body 200.

In some examples, when the first sensor outputs a high level and the second sensor outputs a low level, the controller 70 sends the advance signal for controlling the walking motor 50 to drive the riding mower to advance. When the first sensor outputs a low level and the second sensor outputs a high level, the controller 70 sends the reverse signal for controlling the walking motor 50 to drive the riding mower to reverse. When both the first sensor and the second sensor output low levels, that is, the magnetic body 200 is at the third position, the controller 70 sends the neutral signal for controlling the walking motor 50 to drive the riding mower to stop.

In some parallel examples, when the first sensor outputs a high level and the second sensor outputs a low level, the controller 70 sends a first speed signal for controlling the cutting motor 60 to drive the mowing element to rotate at a first rotational speed. When the first sensor outputs a low level and the second sensor outputs a high level, the controller 70 sends a second speed signal for controlling the cutting motor 60 to drive the mowing element to rotate at a second rotational speed. When both the first sensor and the second sensor output low levels, that is, the magnetic body 200 is at the third position, the controller 70 sends a third speed signal for controlling the cutting motor 60 to drive the mowing element to rotate at a third rotational speed. The first rotational speed, the second rotational speed, and the third rotational speed are different from each other. In some examples, one of the first rotational speed, the second rotational speed, and the third rotational speed is zero.

In some specific examples, the sensor 300 is the Hall effect sensor. The Hall effect sensor includes the Hall chip. The magnetic body 200 generates the magnetic field, and the Hall chip can sense the strength of the magnetic field to trigger the generation of a signal. It is to be noted that the specific structure of the Hall effect sensor belongs to the existing art and is not described in detail here.

Each Hall effect sensor may include one Hall chip or at least two Hall chips.

In some specific examples, when the at least two Hall chips included in the Hall effect sensor sense that the magnetic field of the magnetic body 200 changes with the same tendency, the controller 70 sends a signal for controlling the walking motor 50 or the cutting motor 60. Thus, the multi-signal trigger can be achieved, thereby controlling the walking motor 50 with the higher accuracy and reducing the probability of the false trigger.

Specifically, when two Hall chips of the Hall effect sensor adjacent to the first position both sense that the magnetic field is strengthened and two Hall chips of the Hall effect sensor adjacent to the second position both sense that the magnetic field is weakened, that is, the two Hall chips of the Hall effect sensor at the first position both output high levels and the two Hall chips of the Hall effect sensor at the second position both output low levels, the controller 70 sends the advance signal for controlling the walking motor 50 to drive the riding mower to advance or sends the signal for controlling the cutting motor 60 to drive the mowing element to rotate at the first rotational speed.

Conversely, when the two Hall chips of the Hall effect sensor adjacent to the first position both sense that the magnetic field is weakened and the two Hall chips of the Hall effect sensor adjacent to the second position both sense that the magnetic field is strengthened, that is, the two Hall chips of the Hall effect sensor at the first position both output low levels and the two Hall chips of the Hall effect sensor at the second position both output high levels, the controller 70 sends the reverse signal for controlling the walking motor 50 to drive the riding mower to reverse or sends the signal for controlling the cutting motor 60 to drive the mowing element to rotate at the second rotational speed.

When the two Hall chips of the Hall effect sensor at the first position and the two Hall chips of the Hall effect sensor at the second position all output low levels, the controller 70 sends the neutral signal for controlling the walking motor 50 to stop driving the riding mower or sends the signal for controlling the cutting motor 60 to drive the mowing element to rotate at the third rotational speed. One of the first rotational speed, the second rotational speed, and the third rotational speed is zero. That is, the signal is a stop signal for stopping driving the mowing element to rotate.

In some examples, when any one of the Hall chips included in the Hall effect sensor senses that the magnetic field of the magnetic body 200 changes, the controller 70 sends the signal for controlling the walking motor 50 or the cutting motor 60. Thus, the multi-channel redundancy can be achieved, the detection effectiveness can be improved, and the fault tolerance rate can be increased. When one Hall chip is faulty, another Hall chip operates so that the normal sensing of the Hall effect sensor is not affected.

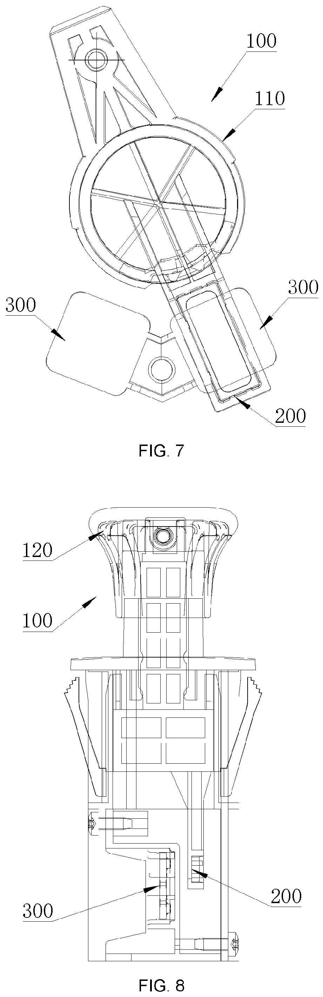

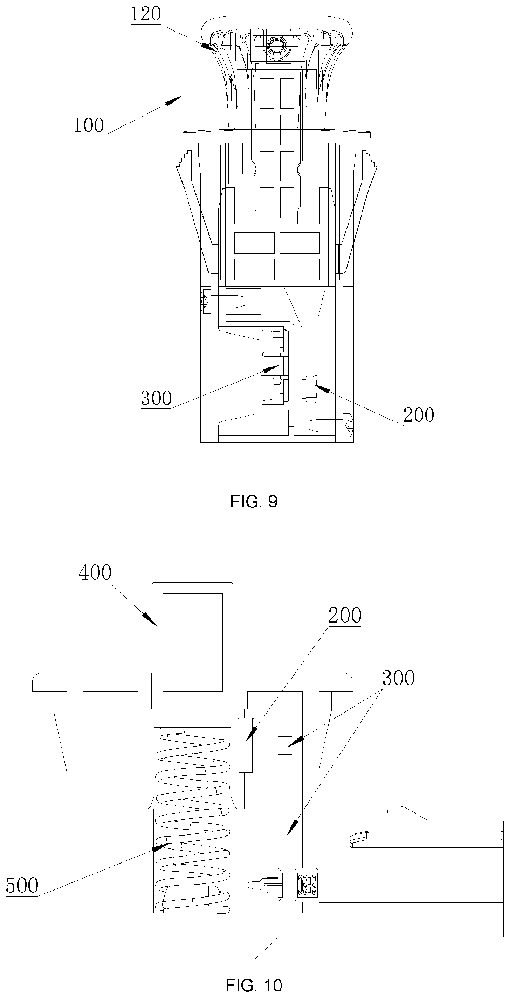

As shown in FIGS. 8 and 9, in an example, the operating member 100 includes a button 120 operable by the user to move up and down, and the magnetic body 200 is disposed under the button 120. The sensor 300 is disposed in proximity to the magnetic body 200 and configured to sense the change in the magnetic field of the magnetic body 200. The controller 70 is connected to the cutting motor 60 and the sensor 300, and the controller 70 is configured to receive, from the sensor 300, the value related to the change in the magnetic field of the magnetic body 200 and control, according to the value related to the change in the magnetic field, the cutting motor 60 to start or stop.

If the user desires to control the cutting motor 60 to start or stop, the user may operate the button 120 so that the button 120 moves downward or upward. In some examples, the magnetic body 200 is disposed on the button 120, and the position of the magnetic body 200 changes as the button 120 moves so that the position of the magnetic body 200 relative to the sensor 300 changes, and the sensor 300 can sense the corresponding change in the magnetic field of the magnetic body 200. When the sensor 300 senses that the strength of the magnetic field changes according to a predicted tendency, the controller 70 may control the start or stop of the cutting motor 60 according to a preset control logic so that the cutting assembly 30 starts or stops cutting.

In some specific examples, as shown in FIG. 14, the button 120 is disposed on the control panel 90. The user can drive the button 120 to move up and down by pressing or pulling the button 120.

The position of the magnetic body 200 changes according to the operation of the user. In some examples, the magnetic body 200 has at least the first position corresponding to the first operation of the user and the second position corresponding to the second operation of the user, the controller 70 controls the cutting motor 60 to start when the magnetic body 200 is at the first position, and the controller 70 controls the cutting motor 60 to stop when the magnetic body 200 is at the second position. It is to be noted that the first position may be higher than the second position or lower than the second position. The number of sensors 300 is set as required, where one, two, or more sensors may be provided.

When one sensor 300 is provided, in a specific example, the sensor 300 is disposed adjacent to the first position. When the sensor 300 outputs a high level, the controller 70 controls the cutting motor 60 to start. When the sensor 300 outputs a low level, the controller 70 controls the cutting motor 60 to stop. In another example, the sensor 300 is disposed adjacent to the second position. When the sensor 300 outputs a high level, the controller 70 controls the cutting motor 60 to stop. When the sensor 300 outputs a low level, the controller 70 controls the cutting motor 60 to start.

When two sensors 300 are provided, the two sensors 300 are disposed adjacent to the first position and the second position, respectively. For convenience of description, one of the two sensors 300 adjacent to the first position is defined as the first sensor, and one of the two sensors 300 adjacent to the second position is defined as the second sensor. When the first sensor outputs a high level and the second sensor outputs a low level, the controller 70 controls the cutting motor 60 to start. When the first sensor outputs a low level and the second sensor outputs a high level, the controller 70 controls the cutting motor 60 to stop.

In some more specific examples, the magnetic body 200 further includes at least one speed regulation position, and the controller 70 regulates a speed of the cutting motor 60 according to different speed regulation positions. The speed regulation position is different from the first position and the second position and may be located above the first position and the second position or below the first position and the second position. One sensor 300 may be disposed adjacent to each speed regulation position. When the corresponding sensor 300 senses a stronger strength of the magnetic field than the other sensors 300, the controller 70 regulates the speed of the cutting motor 60 to a corresponding speed gear. That is, when the sensor 300 at a certain speed regulation position outputs a high level and the sensors 300 at the other positions output low levels, the controller 70 regulates the speed of the cutting motor 60 to the corresponding speed gear.

In some other examples, the magnetic body 200 is not disposed on the button 120 but is disposed at a fixed position in proximity to the button 120. Alternatively, the button 120 is provided with a partition, where the partition is made of a material that can hinder the sensor 300 from sensing the strength of the magnetic field of the magnetic body 200. A position of the partition changes according to the operation of the user so that the strength of the magnetic field sensed by the sensor 300 changes. The partition has at least the first position corresponding to the first operation of the user and the second position corresponding to the second operation of the user. The partition at the first position is between the magnetic body 200 and the sensor 300, and the controller 70 controls the cutting motor 60 to start. The partition at the second position is not between the magnetic body 200 and the sensor 300, and the controller 70 controls the cutting motor 60 to stop.

The sensor 300 is the Hall effect sensor. The Hall effect sensor includes the Hall chip. The magnetic body 200 generates the magnetic field, and the Hall chip can sense the strength of the magnetic field to trigger the generation of a signal. It is to be noted that the specific structure of the Hall effect sensor belongs to the existing art and is not described in detail here.

Each Hall effect sensor may include one Hall chip or at least two Hall chips.

In some specific examples, when the at least two Hall chips included in the Hall effect sensor sense that the magnetic field of the magnetic body 200 changes with the same tendency, the controller 70 sends a signal for controlling the cutting motor 60 to start or stop. Thus, the multi-signal trigger can be achieved, thereby controlling the walking motor 50 with the higher accuracy and reducing the probability of the false trigger.

For example, one Hall effect sensor is provided, and the Hall effect sensor includes two Hall chips.

When the two Hall chips of the Hall effect sensor adjacent to the first position both sense that the magnetic field is strengthened, that is, the two Hall chips of the Hall effect sensor adjacent to the first position both output high levels, the controller 70 controls the cutting motor 60 to start. When the two Hall chips of the Hall effect sensor adjacent to the first position both sense that the magnetic field is weakened, that is, the two Hall chips of the Hall effect sensor adjacent to the first position both output low levels, the controller 70 controls the cutting motor 60 to stop.

Alternatively, when the two Hall chips of the Hall effect sensor adjacent to the second position both sense that the magnetic field is weakened, that is, the two Hall chips of the Hall effect sensor adjacent to the second position both output low levels, the controller 70 controls the cutting motor 60 to start. When the two Hall chips of the Hall effect sensor adjacent to the second position both sense that the magnetic field is strengthened, that is, the two Hall chips of the Hall effect sensor adjacent to the second position both output high levels, the controller 70 controls the cutting motor 60 to stop.

In some examples, when any one of the Hall chips included in the Hall effect sensor senses that the magnetic field of the magnetic body 200 changes, the controller 70 sends the signal for controlling the cutting motor 60 to start or stop. Thus, the multi-channel redundancy can be achieved, the detection effectiveness can be improved, and the fault tolerance rate can be increased. When one Hall chip is faulty, another Hall chip operates so that the normal sensing of the Hall effect sensor is not affected.

In an example, as shown in FIGS. 10 to 13, the magnetic body 200 is disposed in proximity to the carrier 10, and the position of the magnetic body 200 changes according to a load of the carrier 10. The sensor 300 is disposed in proximity to the magnetic body 200 and configured to sense the change in the magnetic field of the magnetic body 200. The controller 70 is connected to the sensor 300, and the controller 70 is configured to receive, from the sensor 300, the value related to the change in the magnetic field of the magnetic body 200 and determine, according to the value related to the change in the magnetic field, whether the carrier 10 carries the user.

As shown in FIG. 1, the carrier 10 is the seat, and the user can sit on the carrier 10. As shown in FIG. 3, the carrier 10 is the standing plate 700, and the user can stand on the carrier 10.

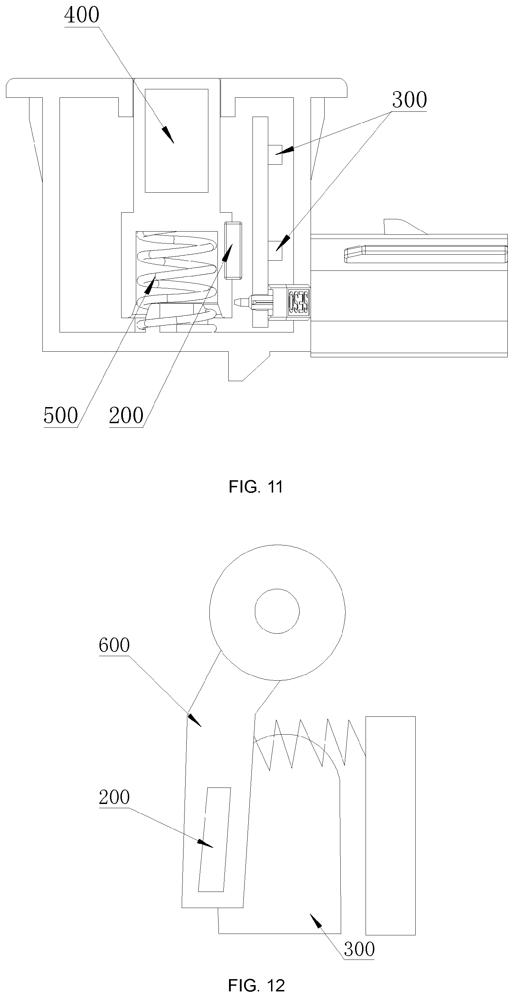

As shown in FIGS. 10 and 11, when the carrier 10 is the seat, a plunger rod 400 and an elastic member 500 are provided below the carrier 10, the elastic member 500 is disposed within the plunger rod 400, and the carrier 10 is elastically fixed through the plunger rod 400 and the elastic member 500. In a specific example, the magnetic body 200 is disposed on the outer side of the plunger rod 400, the sensor 300 is disposed on a side of the magnetic body 200, and the sensor 300 achieves an external interface connection through board-mounted solder pins.

The number of sensors 300 is set as required, where one or two sensors may be provided.

If one sensor 300 is provided, and an initial position of the magnetic body 200 is adjacent to the position of the sensor 300, the magnetic body 200 moves away from the sensor 300 as the load of the carrier 10 increases. If the sensor 300 senses that the strength of the magnetic field decreases from high to low, the sensor 300 outputs a low level, and the controller 70 may determine that the carrier 10 carries the user. If the initial position of the magnetic body 200 is away from the position of the sensor 300, the magnetic body 200 approaches the sensor 300 as the load of the carrier 10 increases. If the sensor 300 senses that the strength of the magnetic field increases from low to high, the sensor 300 outputs a high level, and the controller 70 may determine that the carrier 10 carries the user.

**If** two sensors 300 are provided, one of the two sensors 300 is adjacent to the initial position of the magnetic body 200, and the other sensor is away from the initial position of the magnetic body 200. For convenience of description, the sensor 300 adjacent to the initial position of the magnetic body 200 is defined as the first sensor, and the sensor 300 away from the initial position of the magnetic body 200 is defined as the second sensor. When the first sensor senses a strong magnetic field and the second sensor senses a weak magnetic field, that is, the first sensor outputs a high level and the second sensor outputs a low level, it is determined that the carrier 10 carries no user. When the first sensor senses a weak magnetic field and the second sensor senses a strong magnetic field, that is, the first sensor outputs a low level and the second sensor outputs a high level, it is determined that the carrier 10 carries the user.

As shown in FIGS. 12 and 13, when the carrier 10 is the standing plate 700, the standing plate 700 is linked to a connecting rod 600. In some examples, the magnetic body 200 is disposed on the connecting rod 600, and the magnetic body 200 may be disposed at any position in proximity to the standing plate 700, for example, below, above, or on a side of the standing plate 700 as long as the magnetic body 200 can be linked to the standing plate 700 via the connecting rod 600 or a similar structure. When no user is standing on the standing plate 700, the magnetic body 200 is away from the sensor 300, and it is determined that the carrier 10 carries no user. When the user is standing on the standing plate 700, the magnetic body 200 approaches the sensor 300, and it is determined that the carrier 10 carries the user.

In some specific examples, the riding mower has a manual mode and an unmanned mode, and the riding mower operates in the unmanned mode when the carrier 10 carries no user.

In some specific examples, the riding mower has a protection mechanism. The riding mower allows the power supply assembly 80 to supply power to the cutting assembly 30 and the walking wheel assembly 40 only when the carrier 10 carries the user.

The sensor 300 is the Hall effect sensor. The Hall effect sensor includes the Hall chip. The magnetic body 200 generates the magnetic field, and the Hall chip can sense the strength of the magnetic field to trigger the generation of a signal. It is to be noted that the specific structure of the Hall effect sensor belongs to the existing art and is not described in detail here.

In some specific examples, the magnetic body 200 and the Hall effect sensor are integrated into a modular Hall switch.

In some examples, the modular Hall switch or the split magnetic body and sensor are disposed below the seat and about 40 mm in front of a seat index point (SIP), where the SIP can be measured according to the standard tooling defined in ISO 4.5.3, which is not described in detail here.

Each Hall effect sensor may include one Hall chip or at least two Hall chips.

In some examples, when the at least two Hall chips included in the Hall effect sensor sense that the magnetic field of the magnetic body 200 changes with the same tendency, the controller 70 determines whether the carrier 10 carries the user. Thus, the multi-signal trigger can be achieved, thereby controlling the walking motor 50 with the higher accuracy and reducing the probability of the false trigger.

For example, two Hall effect sensors are provided, and each Hall effect sensor includes two Hall chips.

When the two Hall chips of the Hall effect sensor adjacent to the initial position of the magnetic body 200 sense a stronger magnetic field than the two Hall chips of the Hall effect sensor away from the initial position of the magnetic body 200, it is determined that the carrier 10 carries no user.

Conversely, when the two Hall chips of the Hall effect sensor adjacent to the initial position of the magnetic body 200 sense a weaker magnetic field than the two Hall chips of the Hall effect sensor away from the initial position of the magnetic body 200, it is determined that the carrier 10 carries the user.

In some examples, when any one of the Hall chips included in the Hall effect sensor senses that the magnetic field of the magnetic body 200 changes, the controller 70 determines whether the carrier 10 carries the user. Thus, the multi-channel redundancy can be achieved, the detection effectiveness can be improved, and the fault tolerance rate can be increased. When one Hall chip is faulty, another Hall chip operates so that the normal sensing of the Hall effect sensor is not affected.

Of course, in addition to the examples described above, the non-contact switch structure formed by the sensor 300 and the magnetic body 200 can be used in other aspects of the riding mower, for example, the detection of whether a grass collecting basket or a sunshade is mounted.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A riding mower, comprising:
a steering wheel (130);
a carrier (10) for carrying a user;
a body (20) supporting the carrier (10);
a cutting assembly (30) comprising a mowing element for mowing grass, wherein the cutting assembly (30) is mounted to the body (20);
a walking wheel assembly (40) configured to drive the riding mower to walk on a plane;
a walking motor (50) for driving the walking wheel assembly (40);
a joystick (110) operable by the user, wherein a magnetic body (200) is provided on the joystick (110), and a position of the magnetic body (200) changes according to an operation of the user;
at least one sensor (300) disposed in proximity to the magnetic body (200) and configured to sense a change in a magnetic field of the magnetic body (200); and
a controller (70) connected to the walking motor (50) and the at least one sensor (300), wherein the controller (70) is configured to receive, from the at least one sensor (300), a value related to the change in the magnetic field of the magnetic body (200) and control a rotational direction of the walking motor (50) according to the value related to the change in the magnetic field.

2. The riding mower according to claim 1, wherein each of the at least one sensor (300) is a Hall effect sensor.

3. The riding mower according to claim 1, wherein two sensors (300) are provided, and the two sensors (300) are disposed at a first position of the joystick (110) corresponding to a first operation of the user and a second position of the joystick (110) corresponding to a second operation of the user, respectively.

4. The riding mower according to claim 3, wherein the two sensors (300) comprise a first sensor disposed at the first position and a second sensor disposed at the second position;
when the first sensor outputs a high level and the second sensor outputs a low level, the controller (70) sends an advance signal for controlling the walking motor (50) to drive the riding mower to advance;
when the first sensor outputs a low level and the second sensor outputs a high level, the controller (70) sends a reverse signal for controlling the walking motor (50) to drive the riding mower to reverse; and
when both the first sensor and the second sensor output low levels, the controller (70) sends a neutral signal for controlling the walking motor (50) to stop driving the riding mower.

5. The riding mower according to claim 2, wherein each Hall effect sensor comprises at least two Hall chips separately.

6. The riding mower according to claim 5, wherein when the at least two Hall chips comprised in the Hall effect sensor sense that the magnetic field of the magnetic body (200) changes with a same tendency, the controller (70) sends a signal for controlling the rotational direction of the walking motor (50).

7. The riding mower according to claim 5, wherein when any one of the at least two Hall chips comprised in the Hall effect sensor senses that the magnetic field of the magnetic body (200) changes, the controller (70) sends a signal for controlling the rotational direction of the walking motor (50).

8. The riding mower according to claim 1, wherein the joystick (110) is disposed on a control panel (90), a grip is disposed at an end of the joystick (110), and the magnetic body (200) is disposed at an other end of the joystick (110).

9. The riding mower according to claim 1, further comprising:
a cutting motor (60) for driving the cutting assembly (30);
a button (120) operable by the user, wherein a button magnetic body (200) is provided under the button (120); and
a button sensor (300) disposed in proximity to the button magnetic body (200) and configured to sense a change in a magnetic field of the button magnetic body (200);
wherein the controller (70) is connected to the cutting motor (60) and the button sensor (300), and the controller (70) is further configured to receive, from the button sensor (300), a value related to the change in the magnetic field of the button magnetic body (200) and control, according to the value related to the change in the magnetic field, the cutting motor (60) to start or stop.

10. The riding mower according to claim 9, wherein the button magnetic body (200) has at least a first position corresponding to a first operation of the user and a second position corresponding to a second operation of the user, wherein the controller (70) controls the cutting motor (60) to start when the button magnetic body (200) is at the first position, and the controller (70) controls the cutting motor (60) to stop when the button magnetic body (200) is at the second position.

11. The riding mower according to claim 9, wherein the button sensor (300) is a Hall effect sensor.

12. The riding mower according to claim 1, further comprising:
a carrier magnetic body (200) disposed in proximity to the carrier (10), wherein a position of the carrier magnetic body (200) changes according to a load of the carrier (10); and
a carrier sensor (300) disposed in proximity to the carrier magnetic body (200) and configured to sense a change in a magnetic field of the carrier magnetic body (200);
wherein the controller (70) is connected to the carrier sensor (300), and the controller (70) is configured to receive, from the carrier sensor (300), a value related to the change in the magnetic field of the carrier magnetic body (200) and determine, according to the value related to the change in the magnetic field, whether the carrier (10) carries the user.

13. The riding mower according to claim 12, wherein the riding mower has a manual mode and an unmanned mode, and the riding mower operates in the unmanned mode when the carrier (10) carries no user.

14. The riding mower according to claim 12, further comprising: a power supply assembly (80) configured to supply power to the cutting assembly (30) and the walking wheel assembly (40);
wherein the riding mower allows the power supply assembly (80) to supply power to the cutting assembly (30) and the walking wheel assembly (40) only when the carrier (10) carries the user.

15. The riding mower according to claim 14, wherein the carrier sensor (300) is a Hall effect sensor.
